# EUROPEAN PATENT SPECIFICATION

(11) **EP 0 853 560 B1**
(45) Date of publication and mention of the grant of the patent: **04.09.2002**
(21) Application number: 96917386.3
(22) Date of filing: 20.05.1996
(51) Int. Cl.: B60Q 1/44

(54) **ELECTRONIC SYSTEM FOR ADVANCED ACTIVATION OF AUTOMOTIVE BRAKE-LIGHTS AND ITS CONFIGURATION**
ELEKTRONISCHE EINRICHTUNG ZUR FRÜHZEITIGER STEUERUNG VON BREMSLEUCHTEN
SYSTEME ELECTRONIQUE D'ACTIVATION PRECOCE DES FEUX DE FREINAGE D'UNE AUTOMOBILE, ET CONFIGURATION DUDIT SYSTEME

(43) Date of publication of application: 22.07.1998
(60) Divisional application: 02075238.2
(73) Proprietor: Stille, Reinhardt, 98000 Monaco (MC)
(72) Inventor: Stille, Reinhardt, 98000 Monaco (MC)
(74) Representative: Bird, William Edward
(86) International application number: EP9602158
(87) International publication number: WO97044213

(56) References cited:
- FR-A- 1 439 786
- US-A- 5 381 135

## Description

The invention concerns the configuration of the electric circuit existing in all automotive vehicles, for the purpose of activating the brake-lights thereof. The brake-lights of automotive vehicles play an important role in overall road-safety, as their task is to alert the driver of the vehicle following, that the preceding vehicle is slowing down or coming to a halt. Ideally, the configuration of this circuit and its activating elements, should be such, that the driver of the vehicle following has sufficient time to react, thereby contributing to a smooth traffic flow.

At the present time, the universally adopted method of activating the brake-lights of automotive vehicles in general, is to use a "dumb" brake-pedal and to incorporate somewhere along the hydraulic circuit that activates the brakes, a pressure-sensitive switch. This contact-switch will cause the brake-lights to glow, as soon as, but not before, pressure has been created in the hydraulic circuit, due to the driver's activation of the brake-pedal. The result of employing this classical configuration is, that the vehicle's brake-lights will go on simultaneously with the actual functioning of the vehicle's brakes.
Consequently, the driver of the vehicle immediately following, is only made aware of the deceleration of the preceding vehicle, once braking is already in progress. This forces him to apply a greater pressure to his brakes than the driver of the preceding vehicle and in many instances, the second vehicle is actually unable to "catch-up" with the deceleration of the preceding vehicle. This, of course, results in the all too common rear-end collision, not only of the single variety, but also of the chain or multiple variety, in such situations where road and climatic conditions are adverse and/or a higher speed is permitted on the road or highway.

The last 35 years have witnessed drastic improvements in automotive braking technology, such as the power-assisted brake, the disk-brake and the Anti-lock Braking System, all of which have resulted in considerably reduced braking distances. Meanwhile, the electrical system activating the brake-lights, has remained essentially static, paralleled only by an unchanged human reaction-time.

Therefore, it is the aim of certain prior art documents (Appendix A) and of this invention to overcome the human handicap, through introduction of new electronic devices, that will give drivers following another vehicle, up to two seconds of additional reaction-time. Prior art documents (Appendix A) have already introduced the concept of activating the vehicle's brake-lights, as soon as the driver takes his foot off the accelerator-pedal. Not only is the release of the accelerator-pedal the first motion towards stepping on the brake-pedal, but in actual fact, a release of the accelerator-pedal causes by itself a deceleration of the vehicle, of which the driver of the vehicle that follows, should be made aware of instantly. Secondly, prior art documents (Appendix A) have already introduced the concept of activating the vehicle's brake-lights through "live" or "intelligent" command-pedals, which either have pressure-sensitive contact-switches built into said pedals, or have such pressure-sensitive switches or electronic sensors attached to said command-pedals. These pedals do provide an instant response to the absence or presence of the pressure exerted thereon by the driver's foot.

To accomplish the aims of prior art documents (Appendix A) and of the present invention, we must distinguish between automotive vehicles equipped with automatic transmissions and those with manual gear-boxes. Because the driver of a vehicle equipped with an automatic transmission has his right foot either on the accelerator-pedal or on the brake-pedal, such a vehicle would, "a priori", require only its accelerator-pedal to be of the "intelligent" variety, in order to have the brake-lights activated, as soon as the driver's foot comes off the accelerator-pedal. Notwithstanding, a higher degree of reliability and hence, overall safety, is achieved, by using concurrently also an "intelligent" brake-pedal, which activates the vehicle's brake-lights in parallel with the accelerator-pedal.

In contrast to this, the driver of a vehicle equipped with a manual gear-box, may take his right foot off the accelerator-pedal, not only in order to initiate the braking process, but also in order to change gears. Consequently, to prevent the emission of a false or spurious braking signal, the manual gear-box vehicle will also be equipped with "intelligent" clutch-pedal and "intelligent" brake-pedal. In this configuration, the driver takes his foot off the accelerator, and this would normally cause the brake-lights to turn on, as intended.

However, if his aim is to change gears, he has already placed his left foot on the clutch-pedal, which in this configuration incorporates a "defeat-switch", that overrides and cancels the signal from the accelerator. Hence, during gear-changes the brake-lights are not activated at all, as usual. On the other hand, if the driver has to decelerate, his right foot leaves the accelerator-pedal, which instantly activates the brake-lights. His right foot now depresses the "intelligent" brake-pedal, which then also activates the brake-lights in parallel with the accelerator-pedal. At this point, the driver may realize that he has to come to a halt, and therefore he also depresses the clutch-pedal. This overrides and defeats the signal emanating from the accelerator-pedal and, were it not for the parallel feed from the brake-pedal, the brake-lights would go out. However, as these lights are also activated by the brake-pedal, which is being depressed, the vehicle's brake-lights will remain on, as required by universal traffic legislation.

In addition, the new configuration, described above, has the advantage that any automotive vehicle which is temporarily stopped in traffic or on the side of the road, but not parked, will automatically have its brake-lights on, because the driver has taken his foot off the accelerator. This improves other driver's awareness and hence overall road-safety.

While prior art documents (see for instance FR-A-1439786, disclosing all features of the preamble of claim 1) have attempted to accomplish the aim of an advanced brake-light activation system through a complex array of electro-mechanical switches, the present invention, as claimed, introduces a small electronic device called "Advanced Brake-Light Activator" or "ABLA". This device can easily be fitted to all automotive vehicles during their normal production phase, without disturbing the assembly-line flow, because it is complementary to, and fully compatible with, the conventional brake-light circuit and its conventional control switch, which should be installed as usual. In addition, ABLA can easily be retro-fitted to practically all automotive vehicles presently on the road, as it does not interfere with the already existing brake-light circuit.

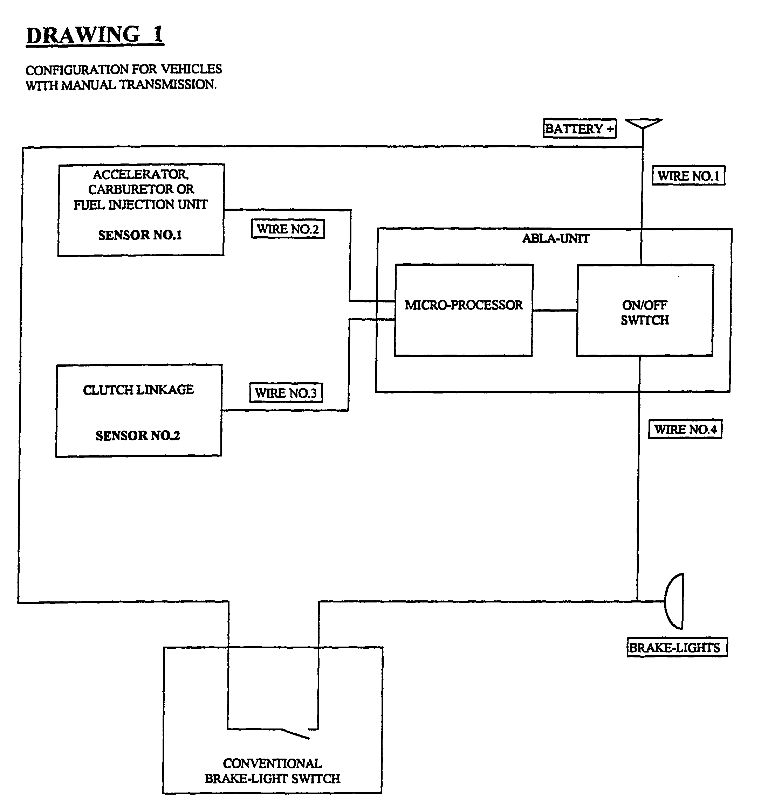

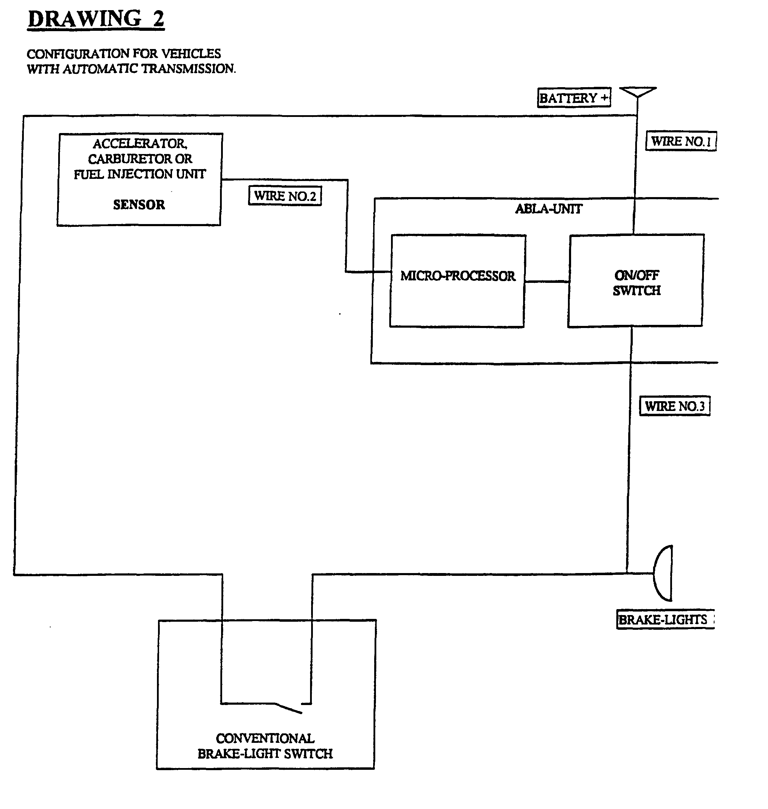

The ABLA device consists of a simple on-off switch which is controlled directly, or through a conventional or a solid-state (transistorized) relay, by an integrated or separately located micro-processor. This micro-processor receives its impulses from two electronic sensors or micro-switches that signal the presence or the absence of pressure exerted on the accelerator and the clutch pedal. The first of these two sensors or micro-switches may be located at the linkage point between accelerator cable and carburetor (or fuel-injection unit, as the case may be), at any other convenient point along that linkage system, or inside the fuel-control unit itself. This sensor or micro-switch will signal to the micro-processor that the accelerator pedal has been released by the driver and as a result the ABLA-switch closes, with the vehicle's brake-lights glowing, as intended. Once triggered by ABLA, the vehicle's brake-lights remain switched-on until the driver steps on the accelerator again. The second sensor or micro-switch, which is only required for vehicles featuring a manual transmission, may be located at any convenient point along the vehicle's clutch linkage, serving to signal to the micro-processor that the clutch is being activated by the driver and hence the micro-processor will ignore the signal emanating from the first sensor or micro-switch connected to the accelerator linkage. This configuration prevents the spurious and unwanted glowing of the brake-lights during gear-changes, as discussed earlier . Consequently, the integrated ABLA-Switch Unit will require only 4 (four) wires or leads for connection to the manual transmission vehicle. Two wires go to the dedicated sensors or micro-switches, one goes directly or indirectly, via the vehicle's ignition switch to the battery, and the fourth connects to the existing brake-light circuit (see Drawing 1). The installation in automatic vehicles is even simpler, as it dispenses with the second sensor or micro-switch due to the absence of a clutch. Therefore, only 3 (three) wires are required for connecting ABLA to automotive vehicles equipped with an automatic transmission (see Drawing 2). Notwithstanding, it is clear that ABLA may also be connected to a set of "live" or "intelligent" pedals containing integrated pressure sensitive switches, as discussed earlier, depending on the vehicle manufacturer's design preferences.

| **APPENDIX A** | | | |
|---|---|---|---|
| Prior Art Document cited for ref. purposes | Publication date | Patent family member (s) | Publication date |
| FR-A-2004128 | 21/11/69 | AT-A 311814 | 15/10/73 |
| | | DE-A,C 1808794 | 9/6/71 |
| | | GB-A- 1213964 | 25/11/70 |
| | | US-A- 3710315 | 9/1/73 |
| US-A-3921750 | 25/11/75 | US-A- 3911394 | 7/10/75 |
| FR-A-2656576 | 5/7/91 | None | |
| GB-A-1098817 | | None | |
| FR-A-2651189 | 1/3/91 | None | |

## Claims

1. A device to activate the brake lights of a vehicle which can be fitted to all new automotive vehicles during their production run, as well as to most vehicles already on the road, the device causing the brake lights to glow as soon as the accelerator pedal is released by the driver, except during gear changes, when its activation is cancelled by stepping on the clutch pedal, the brake lights remaining switched-on until the driver steps on the accelerator pedal again
**characterized in that**
the device comprises an ON/OFF switch, a micro-processor controlling this switch, and two electronic sensors or micro-switches sending signals to the micro-processor, one of these is connected to the accelerator, or to its linkage to the fuel control unit, or directly to this unit, and the other sensor or micro-switch is connected to the clutch pedal or to its linkage.

2. The device according to claim 1, **characterized in that** the sensors or micro-switches are directly build into the command pedals themselves.

## Patentansprüche

1. Vorrichtung zum Aktivieren der Bremslichter eines Fahrzeugs, die sowohl an alle neuen Kraftfahrzeuge während ihres Herstellungsverlaufes als auch an die meisten Fahrzeuge, die sich bereits auf der Straße befinden, angepasst werden kann, wobei die Vorrichtung bewirkt, dass die Bremslichter leuchten, sobald das Fahrpedal von dem Fahrer gelöst wird, mit der Ausnahme, dass bei Gangwechseln, bei denen ihre Aktivierung dadurch gelöscht wird, dass auf das Kupplungspedal getreten wird, die Bremslichter eingeschaltet bleiben, bis der Fahrer wieder auf das Fahrpedal tritt,
**dadurch gekennzeichnet, dass**
die Vorrichtung einen EIN-AUS-Schalter, einen Mikroprozessor, der diesen Schalter steuert, und zwei elektronische Sensoren oder Mikroschalter aufweist, die Signale an den Mikroprozessor senden und von denen einer mit dem Fahrpedal oder mit dessen Verbindung mit der Kraftstoffsteuereinheit oder direkt mit dieser Enheit verbunden ist und der andere Sensor oder Mikroschalter mit dem Kupplungspedal oder mit dessen Verbindung verbunden ist

2. Vorrichtung nach Anspruch 1, **dadurch gekennzeichnet, dass** die Sensoren oder Mikroschalter direkt in die Steuerpedale selbst eingebaut sind.

## Revendications

1. Dispositif pour activer les feux de stop d'un véhicule qui peut s'adapter à tous les nouveaux véhicules automobiles au cours de leur production, aussi bien qu'à la plupart des véhicules déjà en. circulation, le dispositif provoquant l'allumage des feux de stop aussitôt que la pédale d'accélérateur est libérée par le conducteur, sauf pendant des changements de vitesse, quand son. activation est annulée par l'appui sur la pédale d'embrayage, les feux de stop restant allumés jusqu'à ce que le conducteur appuie de nouveau sur la pédale d'accélérateur
**caractérisé en ce que**
le dispositif comprend un. commutateur MARCHE/ARRET, un microprocesseur commandant ce commutateur, et deux capteurs électroniques ou microcommutateurs envoyant des signaux au microprocesseur, l'un de ces derniers est relié à l'accélérateur, ou à sa liaison à l'unité de commande de carburant, ou directement à cette unité, et l'autre capteur ou microcommutateur est relié à la pédale d'embrayage ou à sa liaison.

2. Dispositif selon la revendication 1, **caractérisé en ce que** les capteurs ou microcommutateurs sont directement montés dans les pédales de commande elles-mêmes.
